# EUROPEAN PATENT SPECIFICATION

(11) **EP 4 311 951 B1**
(45) Date of publication and mention of the grant of the patent: **29.10.2025**
(21) Application number: 23187952.9
(22) Date of filing: 26.07.2023
(51) Int. Cl.: F16C 32/04, F16C 39/02, F16C 33/62, H01S 3/225, C22C 19/05

(54) **BEARING APPARATUS AND LASER APPARATUS COMPRISING BEARING APPARATUS**
LAGERVORRICHTUNG UND LASERVORRICHTUNG MIT DER LAGERVORRICHTUNG
PALIER ET APPAREIL LASER COMPRENANT UN TEL PALIER

(30) Priority: 28.07.2022 JP 2022120476
(43) Date of publication of application: 31.01.2024
(73) Proprietor: EBARA CORPORATION, Ota-ku, Tokyo 144-8510 (JP)
(72) Inventor: SATOH, Ichiju, Tokyo, 144-8510 (JP); NIIZUMA, Motoi, Tokyo, 144-8510 (JP); HIRASAWA, Kazuki, Tokyo, 144-8510 (JP); ISHII, Takuya, Oyama-shi, 323-8558 (JP)
(74) Representative: Wimmer, Hubert

(56) References cited:
- CN-A- 113 550 980
- JP-A- 2000 183 436
- JP-B2- 6 307 436
- US-A1- 2015 249 312
- US-B1- 6 577 664

## Description

The present invention relates to a bearing apparatus comprising a magnetic bearing and a touchdown bearing, more specifically, a bearing apparatus used in a fluorine gas environment. Further, the present invention relates to a laser apparatus comprising a bearing apparatus such as that explained above.

A bearing apparatus, which is used in an environment wherein a corrosive gas such as a fluorine gas or the like exists, has been known. For example, each of JP 2000-183436 A, JP 2002-168252 A, and JP 6307436 B discloses a technique to prevent, in an excimer laser apparatus including a fluorine gas in a chamber thereof, corrosion due to the fluorine gas by coating a surface of a touchdown bearing, which holds a cross-flow fan, by a thin film comprising nickel, chromium nitride, or the like.

US 6 577 664 B discloses an excimer laser device which including magnetic bearings each having an inner ring section and an outer ring section, and a cross flow fan for circulating a laser gas in a chamber, touch-down bearings as defined in the preamble of claim 1 are provided on the outer peripheral side of a rotating shaft, and the inner peripheral face of an inner peripheral portion of the touch-down bearing and the outer peripheral face of the rotating shaft are disposed opposite each other with a predetermined clearance smaller than a gap between the outer peripheral face of the inner ring section and the inner peripheral face of the outer ring section.

CN 113 550 980 A discloses a high-performance composite insulating coating sprayed on surface of rolling bearing and preparation method of high-performance composite insulating coating.

US 2015 249312 A discloses a laser chamber housing a pair of discharge electrodes and a gas circulation fun. The laser chamber includes: a magnetic bearing configured to support a shaft of the gas circulation fan, with the shaft being in noncontact with the magnetic bearing; and a touchdown bearing configured to operate as a bearing when the magnetic bearing is uncontrollable, the touchdown bearing being provided with solid lubricant configured of one or more of an Au plating layer, a Ni-containing plating layer, and a Cu plating layer.

In the case that a touchdown bearing is used in a fluorine gas environment, it is necessary to regularly replace the touchdown bearing by the other, or improve corrosion resistance of the touchdown bearing. For improving corrosion resistance of the touchdown bearing, attempts such as constructing the touchdown bearing by using ceramic material, plating the touchdown bearing, and so on have been made. However, there are problems such that a ceramic bearing is expensive, a ceramic bearing is breakable, and a ceramic bearing having a large diameter cannot be manufactured. In the case of a plated touchdown bearing, manufacturing accuracy thereof is lowered due to plating, and a problem with respect to the lifetime thereof may occur if the plate comes off and the corrosion resistance is changed. Even in the construction wherein a surface of a touchdown bearing is coated by a thin film comprising nickel or chromium nitride like the construction disclosed in each of JP 2000-183436 A, JP 2002-168252 A, and JP 6307436 B, there is a matter of concern, specifically, whether the durability of the film is sufficient, and, also, there is a problem that mechanical dimensional accuracy of respective parts of the bearing is deteriorated due to accumulated errors of film thicknesses.

The present invention has been achieved in view of the above matters; and an object of the invention is to provide a bearing apparatus which is superior in corrosion resistance against a fluorine gas, and superior in dimensional accuracy and durability. Further, an object of the present invention is to provide a laser apparatus comprising a bearing apparatus such as that explained above.

In accordance with the present invention, a bearing apparatus as set forth in the appended claims 1 to 6 and a laser apparatus as set forth in the appended claims 7 to 11 are provided.
Fig. 1 is a configuration diagram of a gas laser apparatus in which a bearing apparatus according to an embodiment of the present invention is adopted.
Fig. 2 shows basic chemical and mechanical characteristics of a NiCrAl alloy that is adopted in a bearing apparatus according to an embodiment of the present invention.
Fig. 3 shows result of experiments that were performed for checking corrosion resistance, against a HF solution, of a NiCrAl alloy that is adopted in a bearing apparatus according to an embodiment of the present invention.
Fig. 4 is a configuration diagram of an excimer laser apparatus according to an embodiment of the present invention.
Fig. 5A is a partial enlarged view of a part around a touchdown bearing in an excimer laser apparatus according to an embodiment of the present invention.
Fig. 5B is a partial enlarged view of a part around a touchdown bearing in an excimer laser apparatus according to an embodiment of the present invention.

In the following description, embodiments of the present invention will be explained with reference to the figures. In the figures which will be explained below, a reference symbol that is the same as that assigned to one component is assigned to the other component which is the same as or corresponds to the one component, and overlapping explanation of these components will be omitted.

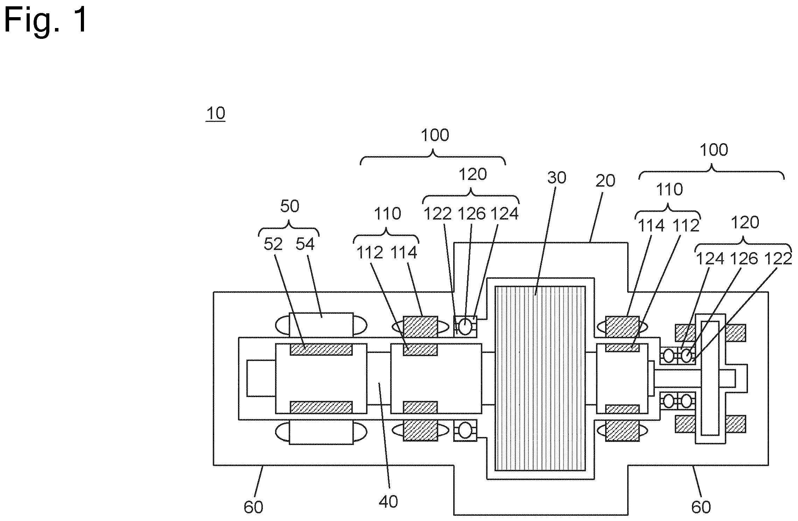

Fig. 1 is a configuration diagram of a gas laser apparatus in which a bearing apparatus according to an embodiment of the present invention is adopted. A bearing apparatus 100 can be incorporated in an excimer laser apparatus 10, for example. The excimer laser apparatus 10 may be, for example, an ArF (argon/fluorine) excimer laser, KrF (krypton/fluorine) excimer laser, a XeCl (xenon/chlorine) excimer laser, or a XeF (xenon/fluorine) excimer laser.

As shown in Fig. 1, the excimer laser apparatus 10 comprises a chamber 20, a cross-flow fan 30, a rotating shaft 40, a motor 50, and the bearing apparatuses 100. The excimer laser apparatus 10 further comprises a discharge electrode, a laser resonator, and so on which are not shown in the figure.

A mixed gas comprising a rare gas such as an Ar (argon) gas or the like and a halogen gas such as a F₂ (fluorine) gas is enclosed in the chamber 20. The cross-flow fan 30 is arranged in the chamber 20, and used for circulating the mixed gas in the chamber 20. The motor 50 rotates the rotating shaft 40, and the cross-flow fan 30 attached to the rotating shaft 40 rotates thereby. The rotating shaft 40 and the cross-flow fan 30 attached to the rotating shaft 40 are supported, on the both sides of the rotating shaft 40, by the bearing apparatuses 100.

During operation of the excimer laser apparatus 10, the mixed gas is circulated in the chamber 20 by the cross-flow fan 30, and the discharge electrode is activated to perform pulse discharging while the mixed gas is being circulated. As a result of pulse discharging, the states of rare gas atoms and halogen atoms are excited to become the states of excimer molecules so that radiation light is generated thereby, and, accordingly, laser oscillation occurs in the resonator and laser light is generated.

The motor 50 and the bearing apparatuses 100 are arranged in a housing 60 formed outside the chamber 20. Further, both ends of the rotating shaft 40 of the cross-flow fan 30 extend to the outside of the chamber 202, thus, to the inside of the housing 60. The inner space of the chamber 60 may not be isolated from the inner space of the chamber 20, and, in such a case, a mixed gas (a corrosive gas) that is the same as that existing in the chamber 20 exists in the housing 60. In this regard, it is possible to adopt a construction for isolating the inner space of the chamber 60 from the inner space of the chamber 20 by using an appropriate construction or member; however, in such a case, there may be a risk that the mixed gas leaks from the chamber 20 to the housing 60 due to incomplete isolation. Accordingly, the bearing apparatuses 100 are to be arranged in an environment wherein a corrosive gas exists.

The motor 50 comprises a rotor 52 and a stator 54. The rotor 52 is attached, in an annularly arranging manner, on an outer circumferential surface of a part, which extends into the housing 60, of the rotating shaft 40. The stator 54 is arranged on an inner wall of the housing 60 in such a manner that the stator 54 faces the rotor 52. The motor 50 is constructed to generate a rotating magnetic field by making current flow through a coil of the stator 54, and rotate thereby the rotating shaft 40 to which the rotor 52 has been attached.

The bearing apparatus 100 comprises a magnetic bearing 110 and a touchdown bearing 120. The magnetic bearing 110 supports the rotating shaft 40 of the cross-flow fan 30 in a noncontact manner by magnetic force. The touchdown bearing 120 is an auxiliary bearing for protecting the magnetic bearing 110, when the magnetic bearing 110 does not function normally (for example, in the case when supplying of electric power to the magnetic bearing 110 is stopped), by preventing the rotating shaft 40 from colliding with the magnetic bearing 110 and breaking the magnetic bearing 110 thereby. The number of revolution of the cross-flow fan 30 is approximately several thousands rpm (for example, 4000-5000 rpm), and the performance of the magnetic bearing 110 is dependent on clearance thereof. It is preferable that the clearance be set as narrow as possible; and if the clearance of the magnetic bearing 110 is set to be narrow, the clearance of the touchdown bearing 120 becomes narrow further. For example, there is a case wherein the clearance of the touchdown bearing 120 is set to that equal to or less than 0.1 mm. The number of occurrence of touchdown (contacting of the rotating shaft 40 with the touchdown bearing 120) is not so much, since touchdown occurs when an emergency such as sudden power shutdown or the like has occurred; however, since it is necessary to stop the cross-flow fan 30 safely when an emergency has occurred, the technique relating thereto is an important technique for ensuring safety.

The magnetic bearing 110 comprises a magnetic member 112 on a rotor side and an electromagnetic coil 114 on a housing side. The rotor-side magnetic member 112 is attached, in an annularly arranging manner, on an outer circumferential surface of a part, which extends into the housing 60, of the rotating shaft 40. The housing-side electromagnetic coil 114 is arranged on an inner wall of the housing 60 in such a manner that the housing-side electromagnetic coil 114 faces the rotor-side magnetic member 112. The magnetic bearing 110 is constructed to receive, in a noncontact manner, the rotating shaft 40 of the cross-flow fan 30, by making current flow through the housing-side electromagnetic coil 114 and generating thereby magnetic attraction force between the rotor-side magnetic member 112 and the housing-side electromagnetic coil 114. The magnetic bearing 110 may further comprise a sensor (for example, a magnetic sensor) which is not shown in the figure for detecting the size of the gap between the rotor-side magnetic member 112 and the housing-side electromagnetic coil 114, and may be constructed to adjust, based on a signal from the sensor, current supplied to the housing-side electromagnetic coil 114 to thereby keep the size of the gap between the rotor-side magnetic member 112 and the housing-side electromagnetic coil 114 constant.

The touchdown bearing 120 comprises an inner ring 122, an outer ring 124, and plural rolling members (balls or rollers) 126. The outer ring 124 is fixed to the inner wall of the housing 60, and the plural rolling members 126 are arranged in a gap formed between the outer ring 124 and the inner ring 122 in such a manner that the plural rolling members 126 are held between the above rings. Each of the rolling members 126 is in contact with the outer circumferential surface of the inner ring 122 and the inner circumferential surface of the outer ring 124, and the inner ring 122 is movable relative to the outer ring 124. A gap has been set between the inner circumferential surface of the inner ring 122 (that is, the surface facing the rotating shaft 40) and the rotating shaft 40, wherein the gap is smaller than that between the rotor-side magnetic member 112 and the housing-side electromagnetic coil 114 in the magnetic bearing 110. Thus, in the case that the magnetic bearing 110 does not function normally (due to shortage of magnetic repulsion force of the magnetic bearing 110 or the like), contacting between the rotor-side magnetic member 112 and the housing-side electromagnetic coil 114 in the magnetic bearing 110 can be avoided by making the inner ring 122 of the touchdown bearing 120 come in contact with the rotating shaft 40. As explained above, during the time when the magnetic bearing 110 works abnormally, the touchdown bearing 120 comes in contact with the rotating shaft 40 of the cross-flow fan 30 and supports it in place of the magnetic bearing 110. Thus, damaging to the magnetic bearing 110 can be prevented.

Since the mixed gas in the chamber 20 exists in the inner space of the housing 60 as explained above, the touchdown bearing 120 is always exposed to a halogen gas such as a F₂ (fluorine) gas, and the gas corrodes the touchdown bearing 120 if it is that constructed by using material having no corrosion resistance.

For preventing corrosion of the touchdown bearing 120 due to the halogen gas, the whole of the inner ring 122 and the whole of the outer ring 124 in the touchdown bearing 120 are constructed by using a NiCrAl alloy. Similarly, the plural rolling members 126 in the touchdown bearing 120 may be constructed by using a NiCrAl alloy, or they may be ceramic rolling members. The NiCrAl alloy is an alloy comprising, as components thereof, Ni (nickel), Cr (chromium), and Al (aluminum). For example, the inner ring 122, the outer ring 124, and the rolling members 126 in the touchdown bearing 120 may comprise a NiCrAl alloy in which the content of Ni is equal to or greater than 50 weight percent. Further, the content of Cr in the above NiCrAl alloy may be equal to or grater than 30 weight percent, and, further, the content of Al may be equal to or grater than 3 weight percent.

In this regard, the expression "comprise a NiCrAl alloy" herein means that the whole of the inner ring 122, the whole of the outer ring 124, and the whole of the rolling members 126 in the touchdown bearing 120 (i.e., not only the surfaces thereof but also the interior parts thereof) are constructed by using the NiCrAl alloy. Thus, regarding the inner ring 122, the outer ring 124, and the rolling members 126, such as those explained above, in the touchdown bearing 120, their durability is high since the surfaces of them are not coated by thin films, and they can be manufactured with high manufacturing accuracy.

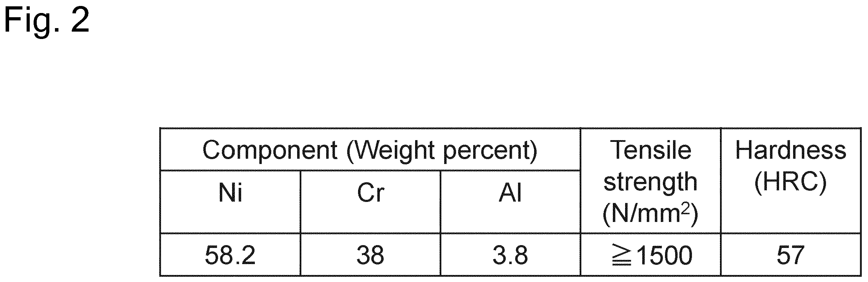

The inventors of the present invention have confirmed by performing experiments that a NiCrAl alloy having composition such as that explained above has extremely high corrosion resistance against a F₂ (fluorine) gas, especially. Fig. 2 shows basic chemical and mechanical characteristics of a NiCrAl alloy used in the experiments. The content of Ni was 58.2 weight percent, the content of Cr was 38 weight percent, and the content of Al was 3.8 weight percent. Further, the tensile strength was equal to or greater than 1500 N/mm², and the hardness (HRC) was approximately 57. The hardness is similar to that of SUS440C, so that it can be understood that the NiCrAl alloy has mechanical characteristics that are sufficient as those of material for a touchdown bearing.

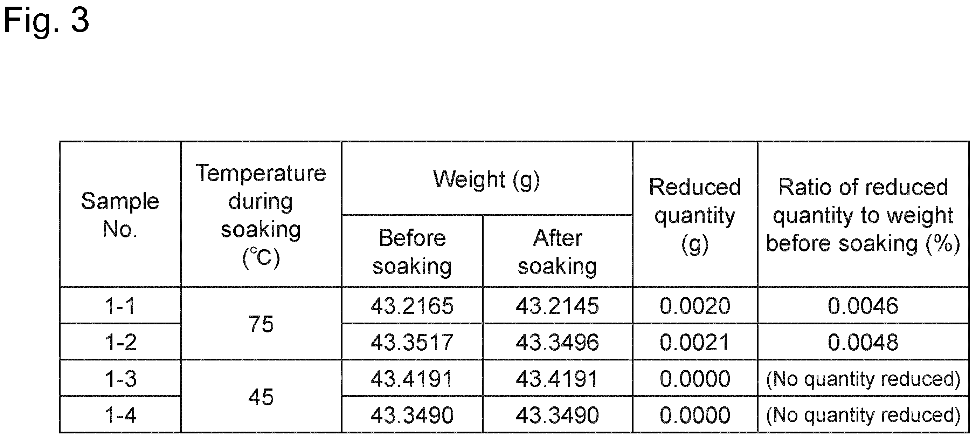

For examining the corrosion resistance of a NiCrAl alloy against a F₂ (fluorine) gas, four samples, each comprising the NiCrAl alloy having the above composition and having the form of a block having the size of 20x20x15 mm, were prepared; two of the samples are soaked in a one-percent HF (hydrofluoric acid) solution, that is maintained at the temperature of 45 degrees Celsius, for one hour, and the remaining two of the samples are soaked in a one-percent HF solution, that is maintained at the temperature of 75 degrees Celsius, for one hour; and change in the weight of each of the samples was measured. Result of the examinations is shown in Fig. 3.

In the case that the temperature of the HF solution during soaking was 45 degrees Celsius, thinning due to corrosion was not observed in any of the samples. On the other hand, in the case that the temperature of the HF solution during soaking was 75 degrees Celsius, minor thinning due to corrosion could be observed in each of the samples; however, the ratio of the quantity reduced as a result of thinning to the weight of the sample before soaking thereof into the HF solution was merely 0.0048 percent. Further, with respect to the external appearance of each of the samples after soaking, although the sample soaked into the 75-degrees-Celsius HF solution has lost its gloss slightly, no major change in the external appearance of the sample could be observed.

As explained above, it has been discovered that the NiCrAl alloy used in the experiments has high corrosion resistance against the HF solution, and, accordingly, it is expected that the NiCrAl alloy has high corrosion resistance against a F₂ (fluorine) gas.

Accordingly, the touchdown bearing 120 comprising the NiCrAl alloy according to the present disclosure is not corroded even in an environment where a F₂ (fluorine) gas exists, and, accordingly, can continuously work normally. Further, since the inner ring 122, the outer ring 124, and the rolling members 126, which comprise the NiCrAl alloy according to the present disclosure, in the touchdown bearing 120 can be manufactured by performing a machining process (i.e., without performing a coating process for forming a thin film comprising a NiCrAl alloy), the touchdown bearing 120 having high dimensional accuracy can be realized.

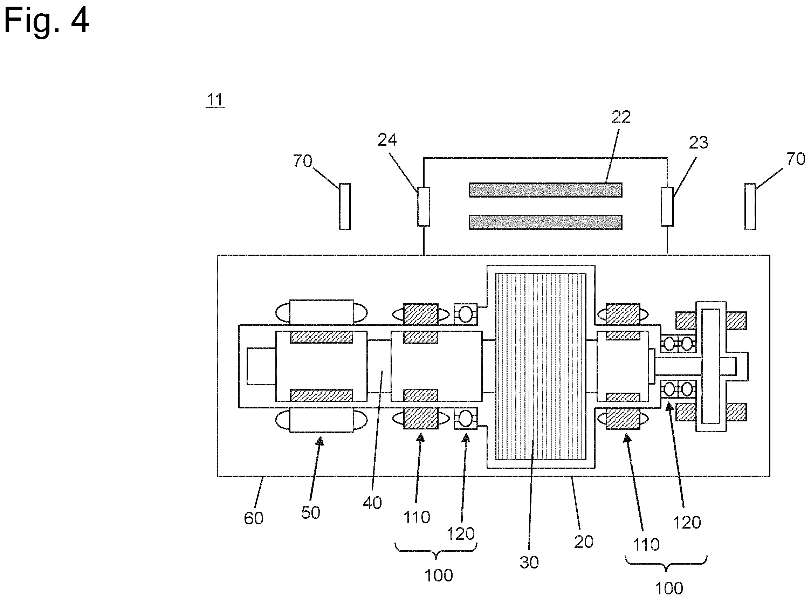

Fig. 4 is a configuration diagram of an excimer laser apparatus according to an embodiment of the present invention. An excimer laser apparatus 11 comprises a chamber 20, a cross-flow fan 30, a rotating shaft 40, a motor 50, a bearing apparatus 100, and a pair of resonance mirrors 70. The chamber 20 comprises a pair of discharge electrodes 22 and windows 23 and 24 which are not shown in Fig. 1. The chamber 20, the cross-flow fan 30, the rotating shaft 40, the motor 50, and the bearing apparatus 100 are the same as those explained in relation to the excimer laser apparatus 10 shown in Fig. 1, so that overlapping explanation of the above components will be omitted herein. The pair of resonance mirrors 70 form a laser resonator.

During operation of the excimer laser apparatus 11, a mixed gas, which comprises a rare gas such as an Ar (argon) gas or the like and a halogen gas such as a F₂ (fluorine) gas, is circulated in the chamber 20 by the cross-flow fan 30, and the discharge electrodes 22 are activated to perform pulse discharging while the mixed gas is being circulated. As a result of pulse discharging, the states of rare gas atoms and halogen atoms are excited to become the states of excimer molecules, so that radiation light is generated thereby. The radiation light reciprocally moves within the laser resonator (i.e., between the pair of resonance mirrors 70) via the windows 23 and 24, and laser oscillation occurs accordingly, so that laser light is generated.

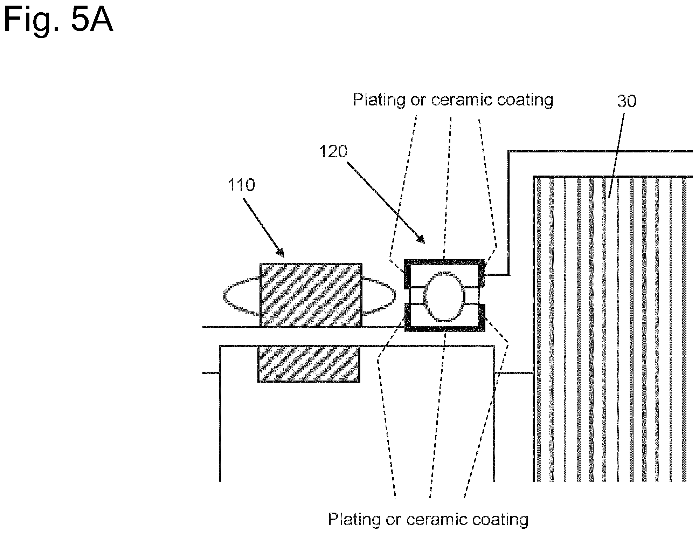

Similar to the case of the excimer laser apparatus 10 shown in Fig. 1, for preventing corrosion of a touchdown bearing 120 in the excimer laser apparatus 11 shown in Fig. 4 due to the halogen gas, an inner ring 122 and an outer ring 124 in the touchdown bearing 120 are constructed by using a NiCrAl alloy. Further, in the excimer laser apparatus 11 according to the present embodiment, it is preferable that surfaces of the inner ring 122 and the outer ring 124, which are constructed by using the NiCrAl alloy, in the touchdown bearing 120 be plated by Ni (nickel) or material comprising Ni, or coated by ceramic material. In order to prevent a hindrance to the driving ability of the touchdown bearing 120 (i.e., for avoiding occurrence of rotation failure due to peeling off of a plated film from a rolling contact surface), the parts where plating or ceramic coating is to be applied are limited to those other than rolling contact surfaces of the inner ring 122 and the outer ring 124 as shown in Fig. 5A.

In this regard, in the case that the outer circumferential surface and the inner circumferential surface of the touchdown bearing 120 (i.e., the surfaces perpendicular to the radial direction of the touchdown bearing 120) are plated or ceramic coated, the gap in the radial direction of the touchdown bearing 120 may be reduced according to variation in the film thickness, and the scope of control of the magnetic bearing 110 may be narrowed thereby. Further, there may be a case wherein part of a plated film on the outer circumferential surface or the inner circumferential surface is damaged and peeled off thereby, and, in such a case, failure of the touchdown bearing 120 may occur if the peeled-off plated film is caught in the gap. On the other hand, it is required that a surface(s) on the side close to the chamber 20 (or the cross-flow fan 30), among the surfaces perpendicular to the axis direction of the touchdown bearing 120, be superior in corrosion resistance than other surfaces since the risk of corrosion therein due to a halogen gas is high.

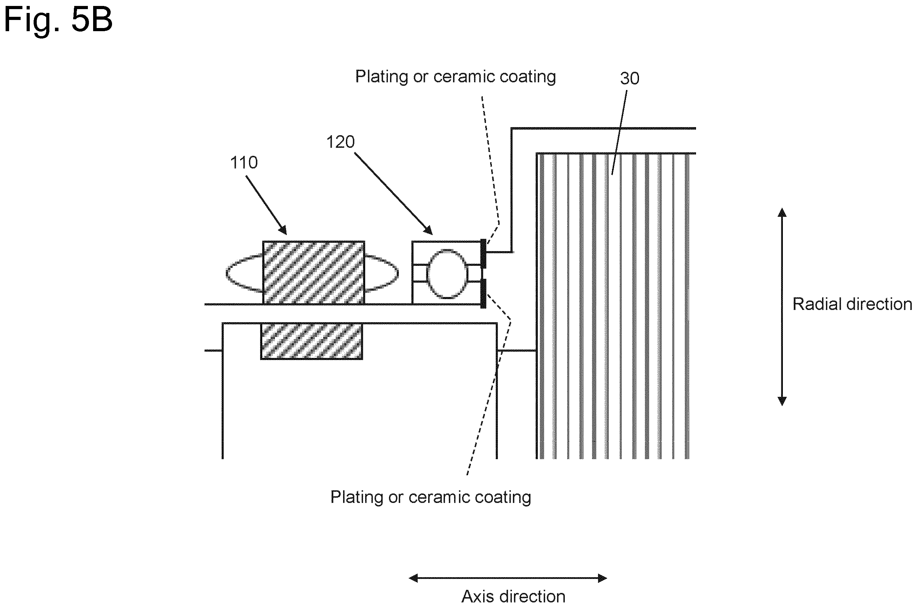

Thus, as shown in Fig. 5B, it is more desirable that the parts, to which plating or ceramic coating is applied, of the inner ring 122 and the outer ring 124 in the touchdown bearing 120 be limited to the parts where risk of corrosion is high, that is, the surfaces on the side close to the chamber 20 (or the cross-flow fan 30) among the surfaces perpendicular to the axis direction of the touchdown bearing 120.

In this regard, in place of the above-explained construction wherein the inner ring 122 and the outer ring 124 in the touchdown bearing 120 are plated or ceramic coated, it may be possible to adopt a construction wherein the surfaces of the inner ring 122 and the outer ring 124 in the touchdown bearing 120 are covered by plated or ceramic coated metal plates comprising Al (aluminum) or the like. The parts which are to be covered by metal plates may be the same as the above-explained parts to which plating or ceramic coating is applied.

The touchdown bearing 120 according to the present embodiment has extremely high corrosion resistance against a halogen gas (especially, a fluorine gas). Further, by plating or ceramic coating the surfaces of the inner ring 122 and the outer ring 124 which comprise the NiCrAl alloy, scattering, in the chamber 20, of Cr (chromium) included in the inner ring 122 and the outer ring 124 can be prevented and polluting of the windows 23 and 24 due to the scattering can be suppressed, and, accordingly, shortening of the life of the chamber 20 can be suppressed.

Further, by limiting the parts, to which plating or ceramic coating is applied, to those other than the rolling contact surfaces of the inner ring 122 and the outer ring 124, the above effect can be obtained without a hindrance to the driving ability of the touchdown bearing 120. Further, by limiting the parts, to which plating or ceramic coating is applied, to the surfaces on the side close to the chamber 20 (or the cross-flow fan 30) among the surfaces perpendicular to the axis direction of the touchdown bearing 120, the above effect can be obtained without narrowing the scope of control of the magnetic bearing 110. Further, similar effect can be obtained in the case that the construction using the plated or ceramic coated metal plates is adopted.

In the above description, embodiments of the present invention have been explained based on some examples; and, in this regard, the above explained embodiments of the present invention are those used for facilitating understanding of the present invention, and are not those used for limiting the present invention. It is obvious that the present invention can be changed or modified without departing from the scope of the appended claims.
10 Excimer laser apparatus
20 Chamber
30 Cross-flow fan
40 Rotating shaft
50 Motor
52 Rotor
54 Stator
60 Housing
100 Bearing apparatus
110 Magnetic bearing
112 Rotor-side magnetic member
114 Housing-side electromagnetic coil
120 Touchdown bearing
122 Inner ring
124 Outer ring
126 Rolling member
11 Excimer laser apparatus
22 Discharge electrode
23, 24 Window
70 Resonance mirror

## Claims

1. A bearing apparatus (100) for use in an environment where a fluorine gas exists, comprising:
a magnetic bearing (110) comprising a magnetic member and an electromagnetic coil; and
a touchdown bearing (120) for protecting the magnetic bearing (110), wherein the touchdown bearing (120) comprises an inner ring (122), an outer ring (124), and plural rolling members (126) arranged between the inner ring (122) and the outer ring (124); **characterised in that**
the whole of the inner ring (122) and the whole of the outer ring (124) in the touchdown bearing (120) are constructed by using a NiCrAl alloy.

2. The bearing apparatus (100) as recited in Claim 1, wherein the plural rolling members (126) are constructed by using a NiCrAl alloy.

3. The bearing apparatus (100) as recited in Claim 1, wherein the plural rolling members (126) are constructed by using ceramic material.

4. The bearing apparatus (100) as recited in any one of Claims 1-3, wherein the content of Ni in the NiCrAl alloy is equal to or greater than 50 weight percent.

5. The bearing apparatus (100) as recited in any one of Claims 1-4, wherein the content of Cr in the NiCrAl alloy is equal to or greater than 30 weight percent.

6. The bearing apparatus (100) as recited in any one of Claims 1-5, wherein the content of Al in the NiCrAl alloy is equal to or greater than 3 weight percent.

7. A laser apparatus (10) comprising:
a chamber (20) in which a laser gas including a fluorine gas is enclosed, wherein the chamber (20) comprises
a fan (30) for circulating the laser gas,
a pair of discharge electrodes (22) for making the laser gas discharge, and
windows (23, 24) arranged to allow laser light to pass through them; and
a bearing apparatus (100) according to any one of claims 1 to 6, wherein the bearing apparatus is configured to support the fan (30)

8. The laser apparatus (10) according to claim 7, wherein
the inner ring (122) and the outer ring (124) in the touchdown bearing (120) are plated by Ni or coated by ceramic material.

9. The laser apparatus (10) as recited in Claim 8, wherein surfaces other than rolling contact surfaces of the inner ring (122) and the outer ring (124) are plated by Ni or coated by ceramic material.

10. The laser apparatus (10) as recited in Claim 9, wherein only surfaces which are perpendicular to the axis direction of the touchdown bearing (120) and positioned on the side close to the chamber (20), among the surfaces of the inner ring (122) and the outer ring (124), are plated by Ni or coated by ceramic material.

11. A laser apparatus (10) according to claim 7, wherein
surfaces which are perpendicular to the axis direction of the touchdown bearing (120) and positioned on the side close to the chamber (20), among the surfaces of the inner ring (122) and the outer ring (124) in the touchdown bearing, are covered by metal plates, wherein the metal plates are plated by Ni or coated by ceramic material.

## Patentansprüche

1. Lagervorrichtung (100) zur Anwendung in einer Umgebung, in der ein Fluorgas vorhanden ist, welche Folgendes aufweist:
ein Magnetlager (110), das ein magnetisches Element und eine elektromagnetische Spule aufweist; und
ein Touchdown- bzw. Fanglager (120) zum Schutz des Magnetlagers (110), wobei das Fanglager (120) einen Innenring (122), einen Außenring (124) und mehrere Wälzkörper (126) aufweist, die zwischen dem Innenring (122) und dem Außenring (124) angeordnet sind;
**dadurch gekennzeichnet, dass**
der gesamte Innenring (122) und der gesamte Außenring (124) in dem Fanglager (120) aus einer NiCrAl-Legierung gefertigt sind.

2. Lagervorrichtung (100) nach Anspruch 1, wobei die mehreren Wälzkörper (126) unter Verwendung einer NiCrAl-Legierung hergestellt sind.

3. Lagervorrichtung (100) nach Anspruch 1, wobei die mehreren Wälzkörper (126) unter Verwendung von Keramikmaterial hergestellt sind.

4. Lagervorrichtung (100) nach einem der Ansprüche 1 bis 3, wobei der Ni-Gehalt in der NiCrAl-Legierung gleich oder größer als 50 Gewichtsprozent ist.

5. Lagervorrichtung (100) nach einem der Ansprüche 1 bis 4, wobei der Cr-Gehalt in der NiCrAl-Legierung gleich oder größer als 30 Gewichtsprozent ist.

6. Lagervorrichtung (100) nach gemäß einem der Ansprüche 1 bis 5, wobei der Al-Gehalt in der NiCrAl-Legierung gleich oder größer als 3 Gewichtsprozent ist.

7. Laservorrichtung (10), die Folgendes aufweist:
eine Kammer (20), in der ein Lasergas eingeschlossen ist, welches Fluorgas aufweist, wobei die Kammer (20) Folgendes aufweist:
einen Ventilator (30) zur Zirkulation des Lasergases,
ein Paar von Entladungselektroden (22) zur Erzeugung der Lasergasentladung; und
Fenster (23, 24), die so angeordnet sind, dass sie Laserlicht durchlassen; und
eine Lagervorrichtung (100) nach einem der Ansprüche 1 bis 6, wobei die Lagervorrichtung so konfiguriert ist, dass sie den Ventilator (30) trägt.

8. Laservorrichtung (10) nach Anspruch 7, wobei der Innenring (122) und der Außenring (124) in dem Fanglager (120) mit Nickel plattiert sind oder mit Keramikmaterial beschichtet sind.

9. Laservorrichtung (10) nach Anspruch 8, wobei die Oberflächen außer den Wälzkontaktflächen des Innenrings (122) und des Außenrings (124) mit Ni plattiert sind oder mit Keramikmaterial beschichtet sind.

10. Laservorrichtung (10) nach Anspruch 9, wobei von den Oberflächen des Innenrings (122) und des Außenrings (124) nur die Oberflächen, die senkrecht zur Achsenrichtung des Fanglagers (120) verlaufen und an der Seite nahe der Kammer (20) positioniert sind, mit Ni plattiert sind oder mit Keramikmaterial beschichtet sind.

11. Laservorrichtung (10) nach Anspruch 7, wobei von den Oberflächen des Innenrings (122) und des Außenrings (124) in dem Fanglager die Oberflächen, die senkrecht zur Achsenrichtung des Fanglagers (120) sind und an der Seite nahe der Kammer (20) positioniert sind, durch Metallplatten abgedeckt sind, wobei die Metallplatten mit Ni plattiert sind oder mit Keramikmaterial beschichtet sind.

## Revendications

1. Appareil de palier (100) destiné à être utilisé dans un environnement où existe un gaz fluoré, comprenant :
un palier magnétique (110) comprenant un élément magnétique et une bobine électromagnétique ; et
un palier de contact (120) destiné à protéger le palier magnétique (110), dans lequel le palier de contact (120) comprend une bague intérieure (122), une bague extérieure (124) et plusieurs éléments roulants (126) disposés entre la bague intérieure (122) et la bague extérieure (124) ;
**caractérisé en ce que**
l'ensemble de la bague intérieure (122) et l'ensemble de la bague extérieure (124) du palier de contact (120) sont construites en utilisant un alliage NiCrAl.

2. Appareil de palier (100) selon la revendication 1, dans lequel les plusieurs éléments roulants (126) sont construits en utilisant un alliage NiCrAl.

3. Appareil de palier (100) selon la revendication 1, dans lequel les plusieurs éléments roulants (126) sont construits en utilisant un matériau céramique.

4. Appareil de palier (100) selon l'une quelconque des revendications 1 à 3, dans lequel la teneur en Ni dans l'alliage NiCrAl est égale ou supérieure à 50 pour cent en poids.

5. Appareil de palier (100) selon l'une quelconque des revendications 1 à 4, dans lequel la teneur en Cr dans l'alliage NiCrAl est égale ou supérieure à 30 pour cent en poids.

6. Appareil de palier (100) selon l'une quelconque des revendications 1 à 5, dans lequel la teneur en Al dans l'alliage NiCrAl est égale ou supérieure à 3 pour cent en poids.

7. Appareil laser (10) comprenant :
une chambre (20) dans laquelle un gaz laser comportant un gaz fluoré est enfermé, dans lequel la chambre (20) comprend
un ventilateur (30) destiné à faire circuler le gaz laser,
une paire d'électrodes de décharge (22) destinée à réaliser la décharge de gaz laser, et
des fenêtres (23, 24) disposées de sorte à permettre à la lumière laser de les traverser ; et
un appareil de palier (100) selon l'une quelconque des revendications 1 à 6, dans lequel l'appareil de palier est configuré pour supporter le ventilateur (30).

8. Appareil laser (10) selon la revendication 7, dans lequel
la bague intérieure (122) et la bague extérieure (124) du palier de contact (120) sont plaquées de Ni ou revêtues de matériau céramique.

9. Appareil laser (10) selon la revendication 8, dans lequel des surfaces autres que des surfaces de contact roulantes de la bague intérieure (122) et de la bague extérieure (124) sont plaquées de Ni ou revêtues de matériau céramique

10. Appareil laser (10) selon la revendication 9, dans lequel seules des surfaces qui sont perpendiculaires à la direction de l'axe du palier de contact (120) et positionnées sur le côté proche de la chambre (20), parmi les surfaces de la bague intérieure (122) et de la bague extérieure (124), sont plaquées de Ni ou revêtues de matériau céramique.

11. Appareil laser (10) selon la revendication 7, dans lequel
des surfaces qui sont perpendiculaires à la direction de l'axe du palier de contact (120) et positionnées sur le côté proche de la chambre (20), parmi les surfaces de la bague intérieure (122) et de la bague extérieure (124) du palier de contact, sont recouvertes de plaques métalliques, dans lequel les plaques métalliques sont plaquées de Ni ou revêtues de matériau céramique.
